# NEUE EUROPÄISCHE PATENTSCHRIFT

(11) **EP 0 761 697 B2**
(45) Veröffentlichungstag und Bekanntmachung des Hinweises auf die Entscheidung über den Einspruch: **12.04.2006**
(45) Hinweis auf die Patenterteilung: 10.05.2000
(21) Anmeldenummer: 96113244.6
(22) Anmeldetag: 19.08.1996
(51) Int. Cl.: C08F 18/04

(54) **Herstellung von Polyvinylester-Dispersionen**
Preparation of polyvinyl ester dispersions
Préparation de dispersions d'esters polyvinyliques

(30) Priorität: 26.08.1995 DE 19531515
(43) Veröffentlichungstag der Anmeldung: 12.03.1997
(73) Patentinhaber: Celanese Emulsions GmbH, 61476 Kronberg/Ts. (DE)
(72) Erfinder: Geissler, Ulrich, Dr., 65329 Hochheim (DE)
(74) Vertreter: Ackermann, Joachim

(56) Entgegenhaltungen:
- DE-A- 3 239 091
- DE-A- 3 323 851
- DE-A- 4 402 408
- US-A- 4 278 727
- US-A- 4 489 192
- US-A- 4 921 898
- Mowilith-Handbuch, 5. Aufl., 1970, S. 38-41
- Journal of Polymer Science, Polymer Chemistry Edition Vol. 11, 1973, S. 1673-1681
- Wako Pure Chemical Industries Ltd. "WACO VA-061" Product Information, 30. Juni 1992
- N. Minamii et al. Polymerizations of Vinyl Monomers, Vol. 28, Dec. 1987, Hrsg. Faculty of Engineering Osaka City University
- Polymer Reaction Engineering, Hrsg. K.-H Reichert et al., Huethig & Wepf Verlag, 1986, S. 101-124

## Beschreibung

Die Erfindung betrifft ein Verfahren zur Herstellung von Schutzkolloid-stabilisierten Dispersionen von Vinylester-Copolymerisaten mit hohem Feststoffgehalt unter Einsatz wasserlöslicher kationischer Azoinitiatoren sowie die Verwendung dieser Dispersionen beziehungsweise der durch Sprühtrocknung daraus erhältlichen redispergierbaren Dispersionspulver zur Modifizierung von Baustoffen.

Aus wirtschaftlichen Gründen sollten Dispersionen mit möglichst hohem Feststoffgehalt hergestellt werden. Diese Forderung kann bisher jedoch nicht für alle Dispersionstypen erfüllt werden. So neigen Schutzkolloid-stabilisierte Dispersionen auf Basis Vinylester/(Meth)Acrylat bei hohen Feststoffgehalten zur Dilatanz.

Der Einsatz kationischer Azoinitiatoren bei der Herstellung Emulgator-stabilisierter Dispersionen ist grundsätzlich bekannt.

In der DE-A 32 39 091 wird ein Verfahren zur Herstellung kationischer Styrol- oder Acrylester-Latices in Gegenwart kationischer Comonomerer beschrieben unter Einsatz einer kationischen Azoverbindung als Initiator. Der Feststoffgehalt der in den Beispielen beschriebenen Dispersionen liegt bei max. 41 Gew.-%.

Die US-A 4 489 192 betrifft härtbare kationische Polymer-Latices auf Basis von Vinylestern und kationischen quartäre Ammoniumgruppen enthaltenden Monomeren, die in Gegenwart eines wasserlöslichen kationischen Azoinitiators, eines Aminothiolsalzes und kationischen und/oder nichtionischen Emulgatoren hergestellt werden.

In einer Publikation von K. Sakota und T. Okaya (J. Appl. Polym. Sci. 20, 1725) (1976) wird über die Herstellung von kationischen Polystyrol-Latices berichtet, wobei als Initiator 2,2'-Azobis(2-amidinopropan)hydrochlorid eingesetzt wird. Stabile Latices werden nur unter Zusatz des kationischen Emulgators Dodecylpyridiniumchlorid oder bei Copolymerisation mit dem kationischen Monomeren Dimethylaminoethylmethacrylathydrochlorid erhalten. Der Feststoffgehalt der beschriebenen Dispersionen liegt unter 25 Gew.-%.

Die Aufgabe der vorliegenden Erfindung bestand darin, ein Verfahren zur Herstellung von Schutzkolloid-stabilisierten Vinylester enthaltenden Polymerdispersionen bereitzustellen.

Die Aufgabe wurde gelöst durch Einsatz von wasserlöslichen, kationischen Azoinitiatoren.

Gegenstand der vorliegenden Erfindung ist ein Verfahren zur Herstellung von Schutzkolloid-stabilisierten copolymere Vinylester enthaltenden Dispersionen mit einem Feststoffgehalt von mindestens 45 Gew.-% durch Polymerisation von mindestens einem Vinylester von linearen oder verzweigten Monocarbonsäuren mit 2 bis 12 Kohlenstoffatomen und weiteren damit copolymerisierbaren Monomeren mittels wasserlöslicher kationischer Azoinitiatoren in Gegenwart eines Schutzkolloids.

Bevorzugte wasserlösliche, kationische Azoinitiatoren Im Sinne der Erfindung sind Azoamidinverbindungen, beispielsweise 2,2'-Azobis(2-methylpropionamidin)dihydrochlorid, 2,2'-Azobis(2-methyl-N-phenylpropionamidin)dihydrochlorid, 2,2'-Azobis[N-(4-chlorophenyl)-2-methylpropionamidin]dihydrochlorid, 2,2'-Azobis[N-(4-hydroxyphenyl)-2-methylpropionamidin]dihydrochlorid, 2,2'-Azobis[N-(4-aminophenyl)-2-methylpropionamidin]tetrahydrochlorid, 2,2'-Azobis[2-methyl-N(phenylmethyl)propionamidin]dihydrochlorid, 2,2'-Azabis[2-methyl-N-2-propenylpropionamidin]dihydrochlorid, 2,2'-Azobis[N-(2-hydroxyethyl)-2-methylpropionamidin]dihydrochlorid, 2,2'-Azobis[2-(5-methyl-2-imidazolin-2-yl)propan]dihydrochlorid, 2,2'-Azobis[2-(2-imidazolin-2-yl)propan]dihydrochlorid, 2,2'-Azobis[2-(4,5,6,7-tetrahydro-1 H-1,3-diazepin-2-yl)propan]dihydrochlorid, 2,2'-Azobis[2-(3,4,5,6-tertahydropyrimidin-2-yl)propan]dihydrochlorid, 2,2'-Azobis[2-(5-hydroxy-3,4,5,6-tertahydropyrimidin-2-yl)propan]dihydrochlorid, 2,2'-Azobis{2-[1-(2-hydroxyethyl)-2-imidazolin-2-yl]-propan}dihydrochlorid.

Besonders bevorzugt wird als Initiator 2,2'-Azobis(2-methylpropionamidin)dihydrochlorid verwendet.

Der Initiator wird vorzugsweise in einer Menge von 0,05 bis 2 Gew.-%, insbesondere 0,1 bis 1 Gew.-%, bezogen auf die Gesamtmenge der Monomeren, eingesetzt.

Als Monomere für das erfindungsgemäße Verfahren kommen die bekannten Vinylester in Frage. Beispiele sind Vinylacetat, Vinylpropionat, Vinylbutyrat, Vinylpivalat, Vinyl-2-ethylhexanoat, Vinylester von ®Versatic-Säure 9, 10 öder 11 (a,a-Dialkyl-verzweigte Monocarbonsäuren, Shell Chemie). Der Anteil der Vinylester beträgt vorzugsweise mindestens 50 Gew.-%, insbesondere 70 bis 90 Gew.-%, bezogen auf die Gesamtmenge der eingesetzten Monomeren.

Geeignete Comonomere sind Ethylen sowie Ester der Acrylsäure oder Methacrylsäure mit einem 1 bis 12 Kohlenstoffatome aufweisenden Alkohol, beispielsweise Methylacrylat, Ethylacrylat, n-Propylacrylat, n-Butylacrylat, i-Butylacrylat, t-Butylacrylat, n-Hexylacrylat, n-Octylacrylat, 2-Ethylhexylacrylat, Methylmethacrylat, Ethylmethacrylat, n-Propylmethacrylat, n-Butylmethacrylat, i-Butylmethacrylat, n-Octylmethacrylat, 2-Ethylhexylmethacrylat. Der Anteil dieser Comonomere beträgt vorzugsweise bis zu 50 Gew.-%, insbesondere 5 bis 30 Gew.-%, bezogen auf die Gesamtmenge der eingesetzten Monomeren.

Weiterhin können monoolefinisch ungesättigte Monocarbonsäuren und Dicarbonsäuren, beispielsweise Acrylsäure, Methacrylsäure, Maleinsäure, Fumarsäure und Itaconsäure sowie Mono- und Diester der Dicarbonsäuren, beispielsweise Maleinsäuremonomethylester und Maleinsäuremono-2-ethylhexylester sowie auch Salze der vorgenannten Säuren eingesetzt werden. Der Anteil dieser Comonomere beträgt vorzugsweise bis zu 5 Gew.-%, insbesondere 0,1 bis 5 Gew.-%, bezogen auf die Gesamtmenge der eingesetzten Monomeren.

Das erfindungsgemäße Verfahren wird insbesondere in vollständiger Abwesenheit von kationischen Comonomeren durchgeführt. Es werden als Monomere Vinylester und ausschließlich weitere Comonomere aus der Gruppe der neutralen und anionischen Monomeren eingesetzt.

Als Schutzkolloid wird vorzugsweise Polyvinylalkohol in einer Menge von 2 bis 15 Gew.-%, vorzugsweise 4 bis 12 Gew.-%, bezogen auf die Gesamtmenge der Monomeren eingesetzt. Der Polymerisationsgrad des Polyvinylalkohols liegt vorzugsweise bei 200 bis 3500, insbesondere zwischen 500 und 3000. Der Hydrolysegrad beträgt vorzugsweise 80 bis 98 Mol-%, besonders bevorzugt 85 bis 95 Mol-% und insbesondere 88 Mol-%.

Weitere Beispiele für geeignete Schutzkolloide sind veretherte Cellulosederivate, beispielsweise Hydroxyethylcellulose, Methylcellulose, Carboxymethylcellulose, wasserlösliche oder durch Hydrolyse abgebaute Stärken sowie Polyvinylpyrrolidon oder Polycarbonsäuren.

Zusätzlich können nach dem erfindungsgemäßen Verfahren noch übliche Zusatzstoffe, beispielsweise nichtionische und/oder ionische Emulgatoren und/oder Entschäumer zugesetzt werden.

Als nichtionische Emulgatoren verwendet man beispielsweise Ethoxylierungsprodukte von Propylenoxid; oder Alkylpolyglykolether wie die Ethoxylierungsprodukte von Lauryl-, Oleyl-, Stearyl- oder Kokosfettalkohol; Alkylphenolpolyglykolether wie die Ethoxylierungsprodukte von Octyl- oder Nonyl-phenol, Diisopropyl-phenol, Triisopropyl-phenol oder von Di- oder Tri-ter.-butyl-phenol.

Als ionische Emulgatoren kommen in erster Linie anionische Emulgatoren in Frage. Es finden dabei die Alkali- oder Ammonium-Salze von Alkyl-, Aryl- oder Alkylarylsulfonsäuren, sowie die entsprechenden Sulfate, Phosphate oder Phosphonate Verwendung, die auch Oligo- oder Polyethylenoxid-Einheiten zwischen dem Kohlenwasserstoffrest und der anionischen Gruppe enthalten können. Typische Beispiele sind Natriumlaurylsulfat, Natriumoctylphenolglykolethersulfate, Natriumdodecylbenzolsulfonat, Natriumlauryldiglykolsulfat, Ammonium-tri-ter.-butylphenolpentaglykolsulfat oder -octaglykolsufat.

Geeignete Entschäumer sind z. B. solche auf Silikon- oder auf Kohlenwasserstoffbasis.

Der pH-Wert der Reaktionsmischungen sollte vorzugsweise zwischen 4 und 7, insbesondere zwischen 3 und 6 liegen. Die Einstellung der pH-Werte erfolgt beispielsweise mit Natriumacetat oder Natriumhydrogencarbonat.

Das Verfahren kann als Batch-, Zulauf- oder kontinuierliches Verfahren durchgeführt werden.

Bevorzugt wird das Saatlatexverfahren. Hierbei wird ein Teil der gesamten Monomermenge (in der Regel 1 bis 20 %) in Form einer Emulsion vorgelegt und nach Zugabe eines Teils der Gesamtinitiatormenge (in der Regel 5 bis 30 %) als Saatlatex vorpolymerisiert. Der Rest des Monomerengemischs sowie die restliche Initialorlösung werden dann langsam zudosiert.

Die Polymerisationstemperatur beträgt vorzugsweise 40 bis 90°C, insbesondere 60 bis 80°C.

Nach dem erfindungsgemäßen Verfahren werden vorzugsweise Dispersionen mit einem Feststoffgehalt von mindestens 45 Gew.-% erzielt. Insbesondere werden Feststoffgehalte zwischen 50 und 75 Gew.-%, besonders bevorzugt zwischen 60 und 70 Gew.% erreicht.

Gegenstand der Erfindung sind auch Schutzkolloid-stabilisierte Polymerdispersionen mit einem Feststoffgehalt von mindestens 45 Gew.%, die durch Polymerisation von von Vinylestern mit ausschließlich weiteren Comonomeren aus der Gruppe der neutralen und anionischen Monomeren mittels wasserlöslicher kationischer Azoinitiatoren erhältlich sind.

Die erfindungsgemäß hergestellten Dispersionen können zur Modifizierung von Baustoffen, z. B. Fliesenkleber, Wärmedämmverbundklebe- bzw. -spachtelmassen, Putze und Reparaturmörtel, eingesetzt werden.

Aus den erfindungsgemäß hergestellten Dispersionen lassen sich durch Sprühtrocknung sehr gut redispergierbare Kunststoffpulver herstellen. Derartige Kunststoffpulver können ebenfalls in hydraulisch abbindenden Baustoffen sowie in Pulverfarben eingesetzt werden.

Gegenstand der Erfindung ist daher auch die Verwendung der nach dem erfindungsgemäßen Verfahren hergestellten Polyvinylester-Dispersionen als Bindemittel in Baustoffen sowie zur Herstellung von redispergierbareh Dispersionspulvern, vorzugsweise für den Einsatz in Baustoffen und Pulverfarben.

Die aus den erfindungsgemäß hergestellten Polyvinylester-Dispersionen erhaltenen Pulver weisen eine höhere Lagerstabilität auf als nach Standardverfahren zugängliche Pulver.

Die folgenden Beispiele dienen der näheren Erläuterung der Erfindung. Die angegebenen Teile und Prozente beziehen sich auf das Gewicht, soweit nicht anders vermerkt.

### Beispiel 1

In einem 4 l Glaskolben, der sich in einem Heizbad befindet und mit Rührer, Rückflußkühler, Tropftrichter und Thermometer ausgestattet ist, wird die in der nachfolgenden Tabelle angegebene Menge vollentsalztes Wasser vorgelegt.

Unter Rühren (130 Upm) werden

| | |
|---|---|
| 117,5 Teile | Polyvinylalkohol (Viskosität einer 4%igen Lösung bei 20°C: 8 mPa·s, Verseifungsgrad: 88 Mol-%, Polymerisationsgrad: 1400), |
| 1,0 Teil | Natriumlaurylsulfat (®Texapon K12, Henkel), |
| 3,3 Teile | eines Ethylenoxid-Propylenoxid-Blockpolymerisats mit 20 % Ethylenoxid (®Genapol PF20, Hoechst AG), |
| 1,0 Teil | eines Entschäumers auf Basis einer Kombination von flüssigen Kohlenwasserstoffen, hydrophober Kieselsäure, synthetischen Copolymeren und nicht-ionogenen Emulgatoren (®Agitan 280, Münzing Chemie), |
| 2,65 Teile | Natriumacetat |

zugegeben und die Mischung auf eine Innentemperatur von 70 °C aufgeheizt (Polymerisationsflotte).

Ferner werden eine Monomerenmischung bestehend aus

| | |
|---|---|
| 580 Teilen | Vinylacetat, |
| 580 Teilen | Vinylester von Versatic-Säure 10 (®VeoVa10, Shell-Chemie) und |
| 130 Teilen | n-Butylacrylat |

sowie eine Initiatorlösung bestehend aus

| | |
|---|---|
| 2,1 Teilen | 2,2'-Azobis(2-methylpropionamidin)dihydrochlorid (®V-50, Wako Chemicals) in |
| 41,5 Teilen | vollentsalztem Wasser |

hergestellt.

Zu der auf eine Innentemperatur von 70 °C erwärmten Polymerisationsflotte werden 130 Teile Monomerenmischung zugegeben. Sobald die Innentemperatur wieder 70 °C erreicht hat, werden 8 Teile Initiatorlösung zugesetzt und 15 Minuten vorpolymerisiert.

Anschließend wird die Monomerenmischung und parallel dazu 30 Teile der Initiatorlösung innerhalb von 3 Stunden bei 70 °C zudosiert. Nach Dosierende wird die restliche Menge an Initiatorlösung zugegeben. Man erwärmt auf 80 °C und läßt bei dieser Temperatur 1 Std. nachreagieren. Nach Abkühlen auf 50 °C werden Lösungen von

| | |
|---|---|
| 1,8 Teilen | tert.-Butylhydroperoxid, 70%ig (®Trigonox A-W 70, Akzo) in |
| 35 Teilen | vollentsalztem Wasser |

sowie

| | |
|---|---|
| 1,3 Teilen | Natriumhydroxymethansulfinat (®Rongalit C, BASF) in |
| 35 Teilen | vollentsalztem Wasser |

über einen Zeitraum von 15 Minuten zudosiert. Danach wird abgekühlt.

Von den hergestellten Dispersionen wurden Feststoffgehalt, Siebrückstand (Filtration durch ein 40 µm Sieb) sowie Partikelgrößenverteilung (Aerosolspektroskopie) ermittelt.

| Nr. | Vorgelegte Wassermenge [Teile] | Feststoff [%] (gef.) | Siebrückstand [%] (40 µm Sieb) | Partikelgrößenverteilung | |
|---|---|---|---|---|---|
| | | | | dw [nm] | dw/dn |
| 1 (Vergleich) | 1590 | 44,9 | 0,274 | 569 | 3,43 |
| 2 | 1459 | 46,8 | 0,087 | 872 | 5,23 |
| 3 | 1338 | 49,0 | 0,065 | 843 | 4,83 |
| 4 | 1174 | 51,8 | 0,056 | 1596 | 10,50 |
| 5 | 1060 | 53,8 | 0,017 | 1472 | 11,85 |
| 6 | 927 | 56,9 | 0,013 | 1335 | 9,73 |
| 7 | 807 | 60,0 | 0,005 | 1328 | 9,92 |
| 8 | 636 | 64,2 | 0,002 | 1746 | 12,79 |

Man erhält Dispersionen mit hohem Feststoffgehalt. In den vorliegenden Beispielen beträgt der Mindestfeststoffgehalt ca. 45 %. Der Siebrückstand nimmt mit zunehmendem Feststoffgehalt ab. Die Partikel von Dispersionen mit hohem Feststoffgehalt sind im Vergleich zu solchen mit geringerem Feststoffgehalt größer, die Verteilung ist breiter.

### Beispiel 2

Es wurden analoge Dispersionen wie in Beispiel 1 hergestellt, jedoch wurde als Schutzkolloid ein Polyvinylalkohol mit folgender Spezifikation eingesetzt:

| | |
|---|---|
| Viskosität einer 4%igen Lösung bei 20 °C | 4 mPa·s, |
| Verseifungsgrad | 88 Mol-% |
| Polymerisationsgrad | 630 |

| Nr. | Vorgelegte Wassermenge [Teile] | Feststoff [%] (gef.) | Siebrückstand[%](40 µm Sieb) | Partikelgrößenverteilung | |
|---|---|---|---|---|---|
| | | | | dw [nm] | dw/dn |
| 9 | 927 | 57,2 | 0,032 | 1256 | 7,19 |
| 10 | 807 | 60,3 | 0,012 | 1373 | 9,04 |
| 11 | 636 | 64,5 | 0,018 | 1272 | 7,25 |

Bei Einsatz des niedermolekularen Polyvinylalkohols beträgt der Mindestfeststoffgehalt ca. 57 %.

### Beispiel 3

Es wurde eine Dispersion wie in Beispiel 1 Nr. 7 beschrieben hergestellt, als Schutzkolloidsystem wurde jedoch folgende Polyvinylalkohol-Mischung eingesetzt:

| | |
|---|---|
| 40 Teile | Polyvinylalkohol (Viskosität einer 4%igen Lösung bei 20 °C: 8 mPa·s, Verseifungsgrad: 88 Mol%, Polymerisationsgrad: 1400) und |
| 77,5 Teile | Polyvinylalkohol (Viskosität einer 4%igen Lösung bei 20 °C: 4 mPa·s, Verseifungsgrad: 88 Mol-%, Polymerisationsgrad: 630) |

Feststoffgehalt, Siebrückstand und Partikelgrößenverteilung sind nachfolgend zusammengestellt:

| Nr. | Feststoff [%] (gef.) | Siebrückstand [%] (40 µm-Sieb) | Partikelgrößenverteilung | |
|---|---|---|---|---|
| | | | dw[nm] | dw/dn |
| 12 | 59,7 | 0,007 | 1769 | 10,21 |

Die Viskosität der Dispersion wurde mit einem Rotationsviskosimeter (VT 500 der Fa. Haake) bei verschiedenen Schergefällen bestimmt:

| Schergefälle D [sec⁻¹] | Viskosität [mPa·s] |
|---|---|
| 10,71 | 5520 |
| 17,93 | 4830 |
| 29,93 | 4430 |
| 58,44 | 3910 |
| 83,21 | 3620 |
| 139,1 | 3090 |
| 231,7 | 2700 |

### Beispiel 4

Es wurde eine Dispersion analog Nr. 7 aus Beispiel 1 hergestellt, jedoch wurden Schutzkolloidsystem, Initiator und Polymerisationsbedingungen wie folgt geändert:

Schutzkolloidsystem:

| | |
|---|---|
| 40 Teile | Polyvinylalkohol (Viskosität einer 4%igen Lösung bei 20 °C: 8 mPa·s, Verseifungsgrad: 88 Mol-%, Polymerisationsgrad: 1400) und |
| 77,5 Teile | Polyvinylalkohol (Viskosität einer 4%igen Lösung bei 20 °C: 4 mPa·s, Verseifungsgrad: 88 Mol-%, Polymerisationsgrad: 630) |

Initiator:

| | |
|---|---|
| 2,1 Teile | 2,2'-Azobis[2-(2-imidazolin-2-yl)propan]dihydrochlorid |

Polymerisationsbedingungen:

| | |
|---|---|
| Polymerisationstemperatur | 60 °C |
| Vorpolymerisationsdauer | 30 Min. |
| Dosierzeit | 5 Std. |
| Schutzgas | Stickstoff |

Es wurden Feststoffgehalt, Siebrückstand, Teilchengrößenverteilung und Viskosität der Dispersion bestimmt:

| Nr. | Feststoff [%] (gef.) | Siebrückstand [%] | Partikelgrößenverteilung | |
|---|---|---|---|---|
| | | | dw[nm] | dw/dn |
| 13 | 60,3 | 0,008 | 1343 | 9,29 |

| Schergefälle D [sec⁻¹] | Viskosität [mPa·s] |
|---|---|
| 10,71 | 4230 |
| 17, 93 | 3750 |
| 29,93 | 3530 |
| 58,44 | 3320 |
| 83,21 | 3240 |
| 139,1 | 3070 |
| 231,7 | 2820 |

### Beispiel 5 (Vergleich)

Es wurden Dispersionen hergestellt, wie in Beispiel 1 beschrieben, jedoch wurde folgende Initiatorlösung eingesetzt:

| | |
|---|---|
| 2,1 Teile | Ammoniumperoxodisulfat in |
| 41,5 Teilen | vollentsalztem Wasser |

Die Polymerisation wurde bei 80 °C durchgeführt. Die Halbwertszeit von Ammoniumperoxodisulfat bei 80 °C entspricht in etwa derjenigen von 2,2'-Azobis(2-methylpropionamidin)dihydrochlorid bei 70 °C.

| Nr. | Vorgelegte Wassermenge [Teile] | Feststoff [%] (gef.) | Siebrückstand[%](40µm Sieb) | Partikelgrößenverteilung | |
|---|---|---|---|---|---|
| | | | | dw [nm] | dw/dn |
| 14 | 1800 | 41,9 | 0,104 | 2618 | 21,65 |
| 15 | 1590 | 44,7 | nicht filtrierbar | dilatant | |
| 16 | 1459 | 46,6 | nicht filtrierbar | dilatant | |

| Schergefälle D [sec⁻¹] | Viskosität [mPa·s] | |
|---|---|---|
| | Disp. 14 | Disp. 15 |
| 10,71 | -- | 18200 |
| 17,93 | 2500 | 17600 |
| 29,93 | 2330 | 16300 |
| 58,44 | 2070 | -- |
| 83,21 | 1900 | -- |
| 139,1 | 1630 | -- |
| 231,7 | 1500 | -- |

Bei Einsatz von Ammoniumperoxodisulfat als Initiator werden ab einem Feststoffgehalt von ca. 45 % dilatante Dispersionen erhalten.

Sprühtrocknung der in den Beispielen 1, 3 und 5 beschriebenen Dispersionen 7, 12 und 14 und Einsatz der isolierten Dispersionspulver in hydraulisch abbindenden Baustoffen:

Zu den Dispersionen 7, 12 und 14 wurden jeweils 5 %, bezogen auf Feststoff, Polyvinylalkohol (Viskosität einer 4%igen Lösung bei 20 °C: 4 mPa·s, Verseifungsgrad: 88 Mol-%, Polymerisationsgrad: 630) als 25%ige Lösung zugesetzt.

Die Dispersionen wurden mit entionisiertem Wasser auf einen Feststoffgehalt von 40 Gew.-% verdünnt und unter Zugabe einer Antibackmittelkombination aus Talk und Dolomit sprühgetrocknet (Sprühtrockner der Fa. Niro, Eingangstemperatur: 130 °C, Ausgangstemperatur: 65 °C, Durchsatz: 1 kg/Stunde). Der Antibackmittelgehalt betrug 12 Gew.-%.

Es wurde die Zementverträglichkeit der Dispersionspulver wie folgt bestimmt:

500 Teile Portlandzement PZ 35 werden mit 1500 Teilen Normsand und 50 Teilen Dispersionspulver trocken gemischt und anschließend mit 250 Teilen Wasser angerührt. Unmittelbar nach Fertigstellung des dispersionspulverhaltigen Zementmörtels sowie 15 bzw. 30 min nach Fertigstellung, wird nach DIN 18 555 Teil 2 das Ausbreitmaß bestimmt. Die Zementverträglichkeit des Dispersionspulvers ist um so besser, je größer das Ausbreitmaß des Zementmörtels ist, und je langsamer dieses als Funktion der Zeit abfällt.

Die Ergebnisse sind in der nachfolgenden Tabelle zusammengestellt:

| Pulver aus Dispersion Nr. | Ausbreitmaß [cm] | | |
|---|---|---|---|
| | sofort | nach 15 min | nach 30 min |
| 7 | 20,2 | 19,3 | 19,2 |
| 12 | 20,6 | 19,5 | 18,9 |
| 14 (Vergleich) | 15,5 | 13,6 | 12,7 |

Man erkennt die deutlich bessere Zementverträglichkeit der erfindungsgemäß hergestellten Dispersionspulver

## Patentansprüche

1. Verfahren zur Herstellung von Schutzkolloid-stabilisierten copolymere Vinylester enthaltenden Dispersionen mit einem Feststoffgehalt von mindestens 45 Gew.-% durch Polymerisation von mindestens einem Vinylester von linearen oder verzweigten Monocarbonsäuren mit 2 bis 12 Kohlenstoffatomen und weiteren damit copolymerisierbaren Monomeren mittels wasserlöslicher kationischer Azoinitiatoren in Gegenwart eines Schutzkolloids.

2. Verfahren nach Anspruch 1, **dadurch gekennzeichnet, daß** als Azoinitiatoren Azoamidinverbindungen eingesetzt werden.

3. Verfahren nach Anspruch 1, **dadurch gekennzeichnet, daß** als Azoinitiator 2,2'-Azobis(2-methylpropionamidin) dihydrochlorid eingesetzt wird.

4. Verfahren nach Anspruch 1, **dadurch gekennzeichnet, daß** als Schutzkolloid Polyvinylakohol in einer Menge von 2 bis 15 Gew.%, bezogen auf die Gesamtmenge der Monomeren eingesetzt wird.

5. Verfahren nach Anspruch 3, **dadurch gekennzeichnet, daß** der Polymerisationsgrad des Polyvinylalkohols 200 bis 3500 beträgt und der Hydrolysegrad 80 bis 98 Mol-% beträgt.

6. Verfahren nach Anspruch 1, **dadurch gekennzeichnet, daß** als Monomere Vinylester und ausschließlich weitere Comonomere aus der Gruppe der neutralen und anionischen Monomeren eingesetzt werden.

7. Schutzkolloid-stabilisierte Polymerdispersion mit einem Feststoffgehalt von mindestens 45 Gew.-%, erhältlich nach dem Verfahren gemäß Anspruch 1.

8. Polymerdispersion nach Anspruch 7, **dadurch gekennzeichnet, daß** der Feststoffgehalt der Dispersion zwischen 60 und 70 Gew.-% liegt.

9. Verwendung der nach dem Verfahren gemäß Anspruch 1 hergestellten Polymerdispersion zur Herstellung von redispergierbaren Dispersionspulvern.

10. Verwendung der nach dem Verfahren gemäß Anspruch 1 hergestellten Polymerdispersion als Bindemittel in Baustoffen.

## Revendications

1. Procédé de préparation de dispersions contenant des copolymères d'ester de vinyle stabilisées par un colloïde protecteur ayant une concentration en matières solides d'au moins 45% en poids par polymérisation d'au moins un ester de vinyle d'acides monocarboxyliques linéaires ou ramifiés ayant de 2 à 12 atomes de carbone et aussi d'autres monomères copolymérisables au moyen d'initiateurs azoïques cationiques hydrosolubles en présence d'un colloïde protecteur.

2. Procédé selon la revendication 1, **caractérisé en ce qu'**on utilise comme initiateurs azoïques des composés azoamidine.

3. Procédé selon la revendication 1, **caractérisé en ce qu'**on utilise comme initiateur azoïque le dichlorhydrate de 2,2'-Azobis(2-méthylpropionamidine).

4. Procédé selon la revendication 1, **caractérisé en ce qu'**on utilise comme colloïde protecteur l'alcool polyvinylique en une quantité de 2 à 15% en poids, par rapport à la quantité totale des monomères.

5. Procédé selon la revendication 3, **caractérisé en ce que** le degré de polymérisation de l'alcool polyvinylique s'élève à 200 à 3.500 et le degré d'hydrolyse de 80 à 98% en mole.

6. Procédé selon la revendication 1, **caractérisé en ce qu'**on utilise comme monomères des esters de vinyle et exclusivement d'autres monomères choisis parmi les monomères neutres et anioniques.

7. Dispersion de polymère stabilisée par un colloïde protecteur ayant une concentration en matières solides d'au moins 45% en poids, qu'on peut obtenir avec le procédé selon la revendication 1.

8. Dispersion de polymère selon la revendication 7 **caractérisée en ce que** la concentration en matières solides de la dispersion se situe entre 60 et 70% en poids.

9. Utilisation de la dispersion de polymère préparée avec le procédé selon la revendication 1 pour la préparation de poudres de dispersion redispersibles.

10. Utilisation de la dispersion de polymère préparée avec le procédé selon la revendication 1 comme liant dans des matériaux de construction.

## Claims

1. A process for the preparation of a dispersion which comprises a copolymeric vinyl ester, is stabilized with a protective colloid and has a solids content of at least 45% by weight, by polymerization of at least one vinyl ester of a linear or branched monocarboxylic acid having 2 to 12 carbon atoms and further monomers which can be copolymerized with this, by means of a water-soluble cationic azo initiator in the presence of a protective colloid.

2. The process as claimed in claim 1, wherein an azo amidine compound is employed as the azo initiator.

3. The process as claimed in claim 1, wherein 2,2'-azobis(2-methylpropionamidine) dihydrochloride is employed as the azo initiator.

4. The process as claimed in claim 1, wherein polyvinyl alcohol is employed as the protective colloid in an amount of 2 to 15% by weight, based on the total amount of monomers.

5. The process as claimed in claim 3, wherein the degree of polymerization of the polyvinyl alcohol is 200 to 3500 and the degree of hydrolysis is 80 to 98 mol%.

6. The process as claimed in claim 1, wherein vinyl esters and exclusively other comonomers from the group consisting of neutral and anionic monomers are employed as the monomers.

7. A polymer dispersion which is stabilized with a protective colloid and has a solids content of at least 45% by weight, obtainable by the process as claimed in claim 1.

8. A polymer dispersion as claimed in claim 7, wherein the solids content of the dispersion is between 60 and 70% by weight.

9. The use of a polymer dispersion prepared by the process as claimed in claim 1 for the preparation of redispersible dispersion powders.

10. The use of a polymer dispersion prepared by the process as claimed in claim 1 as a binder in building materials.
